**Europäisches Patentamt**

**European Patent Office**

**Office européen des brevets**

(19)

(11) **EP 0 773 193 B1**

(12) **EUROPÄISCHE PATENTSCHRIFT**

(45) Veröffentlichungstag und Bekanntmachung des Hinweises auf die Patenterteilung:
**12.04.2000 Patentblatt 2000/15**

(51) Int Cl.⁷: $C02F\ 5/02$, $C02F\ 5/06$

(21) Anmeldenummer: **95117788.0**

(22) Anmeldetag: **11.11.1995**

(54) **Verfahren zum Aufbereiten von weichen Wassern zu Trinkwasser**

Process of manufacture of drinking water from soft water

Procédé de fabrication d'eau potable à partir d'eau douce

(84) Benannte Vertragsstaaten:
**AT BE DE DK ES FR GB IT NL**
Benannte Erstreckungsstaaten:
**LT SI**

(43) Veröffentlichungstag der Anmeldung:
**14.05.1997 Patentblatt 1997/20**

(73) Patentinhaber: **PASSAVANT - ROEDIGER UMWELTTECHNIK GmbH**
**65322 Aarbergen (DE)**

(72) Erfinder: **Graef, Franz**
**D-65589 Hadamar (DE)**

(56) Entgegenhaltungen:
**EP-A- 0 380 299        EP-A- 0 536 908**

**Beschreibung**

Die Erfindung bezieht sich auf ein Verfahren zum Aufbereiten von einen pH-Wert von kleiner/gleich 6 aufweisenden weichen Wässern zu Trinkwasser durch Anheben des pH-Werts und durch Einstellen des Calcit-Gleichgewichts.
Eins der wichtigsten Beurteilungkriterien für die Trinkwassernutzung ist die Eigenschaft des Wassers, Calciumcarbonat abzuscheiden oder aufzulösen. Die Trinkwasserverordnung vom 15.12.1990 schreibt u. a. vor, daß der pH-Wert des abzugebenden Trinkwassers bei metallischen und zementhaltigen Werkstoffen nicht unter dem pH-Wert der Calciumcarbonatsättigung liegen darf, wobei Schwankungen bis -0,2 pH-Einheiten erlaubt sind.

Talsperrenwässer sind oftmals sehr weich und verfügen mangels pH-puffernder Salze über einen niedrigen pH-Wert, das dadurch carbonatlösend wirkt und bei metallischen Werkstoffen Korrosion hervorruft. Eine Aufhärtung des Wassers durch Zufuhr von Aufhärtungsmitteln, wie z. B. Kalkwasser und Kohlendioxid, ist erforderlich, um aus korrosionschemischer Sicht das Kalk-Kohlensäure-Gleichgewicht einzustellen. Die chemische Reaktion läuft vereinfacht wie folgt ab:

$$Ca^{2+} + 2OH + 2CO_2 \rightarrow Ca^{2+} + 2HCO_3$$

Unter den Aufhärtungsmineralien findet man Kalkhydrat, das als Kalkmilchsuspension dosiert werden kann, sowie halbgebrannter Dolomit, Jurakalk oder Kalkstein, welche als Schüttgüter in durchströmte Lösebehälter eingesetzt werden.

Ein bereits bekanntes Verfahren zur Aufbereitung von zu weichen Wässern ist dadurch gekennzeichnet, daß der pH-Wert des Rohwassers zunächst durch Zufuhr von mindestens einem Aufhärtungsmittel angehoben, dann die Trübstoffe geflockt und die Flockungsprodukte abgefiltert werden und zuletzt das Calcit-Gleichgewicht durch erneute Zufuhr mindestens eines Aufhärtungsmittels eingestellt wird (Z. "gwf" - Das Gas-Wasser-Fach, 4/93, S. 3-6, Helmut Hubert "Aufbereitung von weichen, sauren wässern mit hochreinem Kalkwasser").

Nachteilig ist an diesem bekannten und in der Praxis eingesetzten Verfahren, daß Aufhärtungsmittel zweimal zugeführt werden müssen, und zwar zuerst zur Einstellung einer Grundhärte und dann nach dem Abfiltern zum Aufhärten, d. h. Einstellen eines Calcit-Gleichgewichts.

Die Aufgabe, diesen Nachteil zu vermeiden wird erfindungsgemäß mit den Merkmalen von Anspruch 1 gelöst. Mit diesem geänderten Verfahrensablauf ist der Vorteil verbunden, daß die Aufhärtung jetzt nur nach der Filtration durchgeführt wird, da das hochreaktive Kalkwasser als klare Lösung zugeführt wird, ohne die sonst erforderliche Feststoffabtrennung durchführen zu müssen. Damit besteht die Möglichkeit, saure, weiche Wässer so aufzubereiten, daß im ersten Aufbereitungsschritt im optimalen pH-Bereich geflockt werden kann. Die Flockung ist als Vorbehandlung immer dann erforderlich, wenn der Trübungswert im Trinkwasser von ≤ 1,0 TE/F durch einfache Filtration nicht erreichbar ist. Als Flockungsmittel werden meist Eisen-III-Salze wie $FeClSO_4$ bzw. $FeCl_3$ oder Aluminiumsalze wie $AlCl_3$, $Al_2(SO_4)_3$ bzw. Polyaluminiumchlorid eingesetzt, deren Wirkung zur Entstabilisierung der Kolloide sowie deren Hydrolyse zum unlöslichen, flockenbildenden $Me(OH)_3$ bekannt sind. Dabei wird oftmals ein pH-Bereich von 6,0 - 6,5 angestrebt, um gelöste Organik, den Rest-Eisen- bzw. Aluminiumwerte effektiver zu reduzieren. Die spezifische Flockungsmittelmenge zur Dosierung liegt je nach Qualität des Rohwassers um 0,1 - 0,2 $Mol/m^3$. Die dabei freiwerdenden stöchiometrischen Säureäquivalente lassen den pH-Wert weit unter pH 6,0 absinken, so daß Kalkwasser als Hydroxidionenlieferant den Säureanteil neutralisieren muß.

Durch eine pH- Meß- und Regelanlage wird der optimale Soll-PH-Wert gehalten. Die Calcium-Ionen des Kalkwassers tragen zur geringfügigen Vor-Aufhärtung bei.

Der zweite Aufbereitungsschritt ist die Abtrennung der Trübstoffe und der entstabilisierten, geflockten Inhaltsstoffe des Rohwassers über z. B. Kiesfilter oder Mehrschichtfilter. Da der optimale Flockungs-pH-Wert im schwach sauren Bereich liegt, muß Wasser nach der Filtration entsäuert, aufgehärtet und das Kalk-Kohlensäure-Gleichgewicht eingestellt werden. Diese drei Einstellungen werden erfindungsgemäß in einem Schritt ausgeführt wobei die Calcit-Gleichgewichtseinstellung zu pH-Werten von 8,0 < pH < 8,5 führt und somit eine wesentliche Voraussetzung für hygienisch und korrosionschemisch unbedenkliches Wasser gegeben ist. Der Härtegrad kann zwar beliebig bis 7° dH eingestellt werden, soll aber im wesentlichen von den ausgeführten Werkstoffen im Versorgungsnetz abhängig gemacht werden. Beispielsweise darf man bei Verwendung von Eisenwerkstoffen (unlegierte u. verzinkte) nach DIN 50930 Teil 1-5 die 4,2° dH an Karbonathärte nicht unterschreiten.

Das erfindungsgemäße eingesetzte, hochreine Kalkwasser wird in einem durch DE-A-28 02 066 bekannten Anlagenteil hergestellt. Die Lösung entsteht aus einer mit Kalkhydrat angesetzten oder aus einer mit Branntkalk gelöschten Kalkmilchsuspension, die in der Aufbereitungsanlage auf maximale Kalk-Lösekonzentration mit Ansetzwasser verdünnt wird. Als Ansetzwasser wird erfindungsgemäß das Rohwasser, das vor der eigentlichen Trinkwasserbehandlung aus der Hauptleitung entnommen wird, herangezogen.

Durch die Kalkwasseraufbereitung erreicht man, daß das Calciumhydroxid vollständig in Lösung geht und damit völlig dissoziiert vorliegt ($Ca^{2+}$ + 2 OH), wobei eine Konzentration von ca. 1,4 $kg/m^3$ $Ca(OH)_2$ erreicht wird.

Inerte Feststoffe, die im Lieferkalk je nach Sorte in unterschiedlicher Menge und Zusammensetzung vorliegen, werden als sedimentierbare Inhaltsstoffe durch das Flockungsverfahren von der Klarlösung getrennt. Hierbei durchströmt das Wasser-Suspensionsgemisch eine mehrstufige Kammeranordnung, in der die physiko-chemischen Grundoperationen zur Lösung des Kalkes, die Koagulation von Mikroflocken sowie die Ausbildung von sedimentierbaren Makroflocken ablaufen. Als Flockungsmittel ist lediglich ein synthetischer Polyelektolyt erfoderlich, während ein Primärflockungsmittel nicht dosiert zu werden braucht, da je nach Kalksorte meist genügend Magnesium-Ionen begleitend enthalten sind. Diese und die vorhandenen Schwermetalle fallen als Hydroxide aus und wirken dabei entstabilisierend wie ein üblicherweise eingesetztes drei-wertiges Metallsalz als Primärflockungsmittel.

Die Abtrennung der flockigen Feststoffe erfolgt über einen Parallelplattenabscheider und einen unmittelbar angeschlossenen Eindicker. Die oben austretende Klarphase ist nahezu feststofffrei. Dabei beträgt die Gesamtaufbereitung, bestehend aus Löse- und Sedimentationszeit, ca. 15 Minuten.

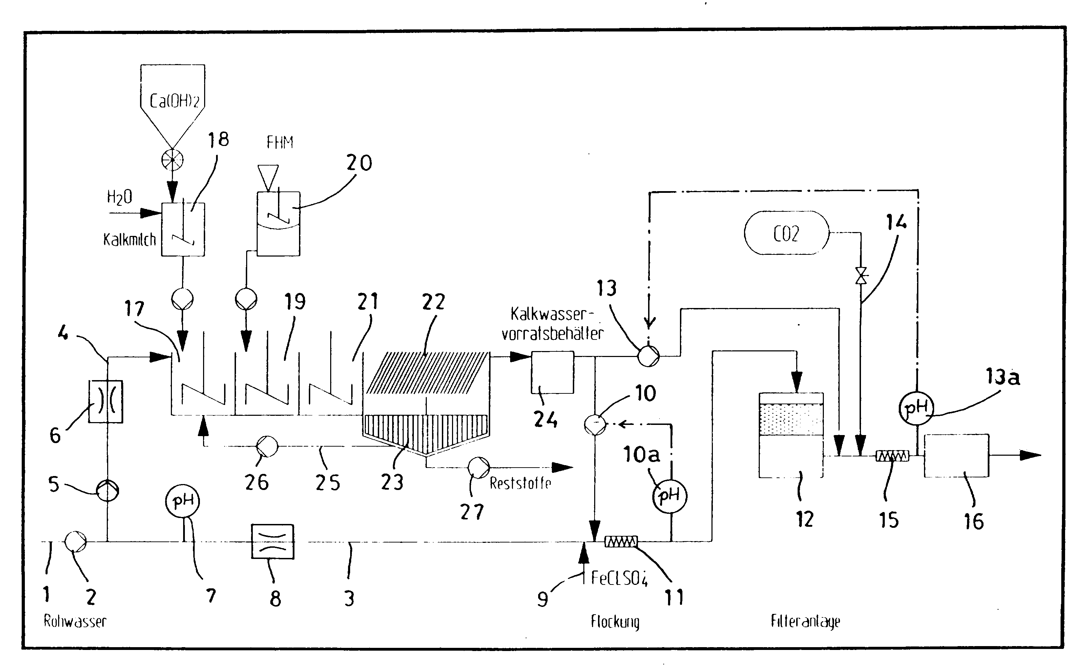

Die Abbildung stellt das Verfahrensfließbild in der bevorzugten Ausführungsform dar.

Die in das Anlagenschema eingetragenen Bezugsziffern haben folgende Bedeutung:

1     Rohwasserzulauf
2     Förderpumpe
3     Hauptleitung
4     Zweigleitung
5     Förderpumpe in der Zweigleitung
6     Durchflußmesser in der Zweigleitung
7     pH-Messer in der Hauptleitung
8     Durchflußmesser in der Hauptleitung
9     Zudosierung des Flockungsmittels
10    Dosierpumpe für Kalkwasser
10a   pH-Messer nach Reaktionsgefäß mit Steuerleitung zur Dosierpumpe 10
11    Reaktionsgefäß mit Mischer
12    Filter
13    Dosierpumpe für Kalkwasser
13a   pH-Messer nach Misch- u. Reaktionsstrecke mit Steuerleitung zur Dosierpumpe 13
14    Zufuhrleitung für $CO_2$
15    Mischstrecke
16    Pufferbecken
17    Schlammkontakt- und Flockungsbecken
18    Kalkmilchansetzgefäß
19    Mischbecken für Flockungshilfsmittel (FHM)
20    Ansetzgefäß für FHM (Polyelektrolyt)
21    Reaktionsbecken
22    Schrägplattensedimentator
23    Schlammeindicker
24    Vorratsgefäß für Kalkwasser
25    Kontaktschlammrückführung
26    Rückführpumpe

27    Abfuhr des Überschußschlamms.

**Patentansprüche**

1. Verfahren zur Aufbereitung von einen pH-Wert von ≤ 6 aufweisenden weichen Wässern zu Trinkwasser durch Anheben des pH-Wertes mittels Zufuhr von als Aufhärtungsmittel dienendem hochreinem Kalkwasser und Kohlendioxid, durch Fällung und Flokkung der Trübstoffe mittels Metallsalzen, Abfiltern der Flockungsprodukte und Einstellung des Calcit-Gleichgewichtes mittels weiterer Zufuhr von Aufhärtungsmitteln, **dadurch gekennzeichnet,** daß die Aufhärtung mittels Zufuhr von Kohlendioxid und hochreinem Kalkwasser zum Zwecke der Karbonaufhärtung und die Einstellung des Calcit-Gleichgewichtes gemeinsam ausschließlich nach dem Abfiltern der Flockungsprodukte erfolgt.

2. Verfahren nach Anspruch 1, **dadurch gekennzeichnet** daß zur Einstellung des optimalen pH-Wertes für die Flockung ebenfalls hochreines Kalkwasser eingesetzt wird.

3. Verfahren nach Anspruch 1 oder 2, **dadurch gekennzeichnet,** daß zur Herstellung des hochreinen Kalkwassers Rohwasser aus der Aufbereitungsanlage verwendet wird.

4. Verfahren nach Anspruch 1, 2 oder 3, **dadurch gekennzeichnet,** daß das hochreine Kalkwasser proportional zur Rohwassermenge hergestellt und dosiert wird.

**Claims**

1. Procedure for the potable water treatment for sweet water having a pH value of ≤ 6, consisting in increasing the pH value by adding extremely pure lime water as hardening means and carbon dioxide, in settling and flocculating of suspended solids by means of metallic salts, in separating the flocs by filtration and finally in adjusting the calcite equilibrium by adding additional hardening agents **characterized in that** the hardening by adding carbon dioxide and extremely pure lime water in order to achieve a carbonate hardening and the adjustment of the calcite equilibrium will take place at the same time but only after removal of the flocculation products by filtration.

2. Procedure according to claim 1, **characterized in that** extremely pure lime water is also used to adjust the optimum pH value for the flocculation step.

3. Procedure according to one of the claims 1 or 2, **characterized in that** raw water from the treatment plant is used to produce the extremely pure lime water.

4. Procedure according to one of the claims 1, 2 or 3, **characterized in that** the extremely pure lime water is produced and dosed proportionnally to the raw water quantity.

**Revendications**

1. Procédé destiné au traitement d'eaux à potabiliser pour les eaux douces ayant une valeur pH de ≤ 6, consistant à augmenter la valeur pH en ajoutant de l'eau de chaux extra-pure comme durcissant et anhydride carbonique, à précipiter et floculer les matières en suspension à l'aide de sels métalliques, à séparer les aggrégats de floculation par filtration, et à ajuster l'équilibre de calcite à l'aide de l'ajout additionnel de durcissants, **caractérisé en ce que** le durcissement à l'aide de l'ajout d'anhydride carbonique et d'eau de chaux extra-pure pour un durcissement au carbonate et l'ajustage de l'équilibre de calcite sont effectués au même temps et uniquement aprés avoir séparé les aggrégats de floculation par filtration.

2. Procédé selon revendication 1, **caractérisé en ce que** l'eau de chaux extra-pure est également utilisée pour ajuster la valeur pH optimum pour la floculation.

3. Procédé selon une des revendications 1 et 2, **caractérisé en ce que** l'eau brute provenant de la station de traitement est utilisée pour la production de l'eau de chaux extra-pure.

4. Procédé selon une des revendications 1 à 3, **caractérisé en ce que** l'eau de chaux extra-pure est produite et dosée proportionnellement à la quantité de l'eau brute.

EP 0 773 193 B1